# EUROPÄISCHE PATENTANMELDUNG

(11) **EP 2 886 895 A2**
(43) Veröffentlichungstag der Anmeldung: **24.06.2015**
(21) Anmeldenummer: 14197202.6
(22) Anmeldetag: 10.12.2014
(51) Int. Cl.: F16C 33/78

(54) **Wälzlager mit Dichtungseinheit**

(30) Priorität: 19.12.2013 DE 102013226554
(71) Anmelder: Aktiebolaget SKF, 41 550 Göteborg (SE)
(72) Erfinder: Kern, Henning, 97422 Schweinfurt (DE); Back, Femke, 97422 Schweinfurt (DE); Bettenhausen, Jens, 97072 Würzburg (DE); Hain, Steffen, 97753 Karlstadt (DE); Hofmann, Matthias, 97422 Schweinfurt (DE); Lorenscheit, Jochen, 97222 Rimpar (DE); Pfeuffer, Christina, 97776 Eußenheim (DE); Pickel, Edgar, 97334 Sommerach (DE); Schleyer, Werner, 96182 Reckendorf (DE); Seuberling, Mathias, 97633 Großeibstadt (DE)
(74) Vertreter: Kuhstrebe, Jochen

(57) **Zusammenfassung**

Ein Wälzlager 10a; 10b; 10c umfasst einen ersten Lagerring 12a; 12b; 12c, einen zweiten Lageming 14a; 14b; 14c und eine Dichtungseinheit 16a; 16b; 16c. Die Dichtungseinheit 16a; 16b; 16c umfasst hierbei ein gegenüber dem ersten Lagerring 12a; 12b; 12c und dem zweiten Lagerring 14a; 14b; 14c verdrehbares, zumindest teilringfärmiges Hauptelement 18a; 18b; 18c.

## Beschreibung

Die nachfolgende Erfindung liegt auf dem Gebiet der Abdichtung von Wälzlagern.

Bekannte Dichtungskonzepte für Lager können zwar einen Schutz eines Wälzlagers vor Schmutz und Verunreinigung bieten, sind aber durch das individuell, auf das jeweilige Lager zugeschnittene Design nur auf geringe Fertigungsstückzahlen beschränkt und schwer auf andere Wälzlagergrößen oder gar Wälzlagertypen übertragbar. Außerdem ist ein einfacher Dichtungsaustausch im montierten Zustand nur erschwert möglich, da durch aufwändigen und kostenintensiven Demontageaufwand Umbauteile für den Dichtungstausch entfernt werden. Dies ist insbesondere für Großlager ab einem Durchmesser oder Radius von etwa 400 Millimetern der Fall.

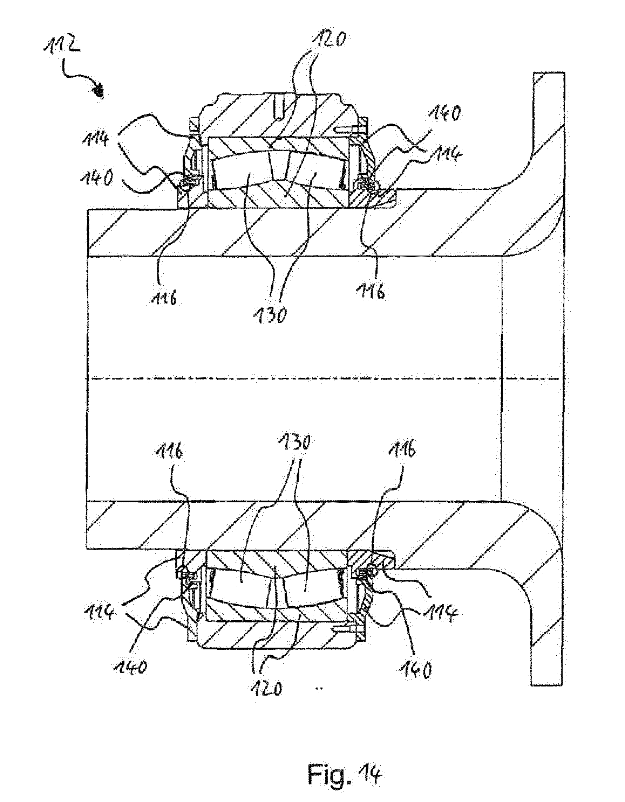

Fig. 14 zeigt eine konventionelle Dichtung eines Großlagers 112 anhand eines Vergleichsbeispiels. Das Großlager 112 wird auf zwei Seiten durch sogenannte Labyrinthe 140 abgedichtet, die durch Labyrinthringe 114 gebildet werden. Die Dichtung setzt sich demnach aus beiderseitig vorgesehenen Labyrinthringen 114 zusammen, die labyrinthförmig ausgebildete Dichtungsspalte, die sogenannten Labyrinthe 140, bilden. Durch die mäanderförmige Geometrie der so gebildeten Labyrinthe 140 kann das Eindringen von Fremdstoffen in den zu dichtenden Bereich, beispielsweise zu den Wälzkörpern 130 oder den Laufflächen der Lagerringe 120, erschwert werden. Alle Zwischenräume des Labyrinths 140 und auch des Wälzlagers 112 können bei dieser Dichtungsvariante gewöhnlich mit Fett oder Schmierstoff gefüllt werden. Außerdem kann ein unterstützender, sogenannter V-Ring 116 am oder im Labyrinth 140 eingesetzt werden. Durch periodisches Nachschmieren kann die Dichtwirkung zusätzlich unterstützt werden. Alle genannten Komponenten können Kostenfaktoren sein. Zudem ragen die das Labyrinth 140 bildenden Labyrinthringe 114 über die Breite des eigentlichen Wälzlagers 112, genauer gesagt über die Breite der Lagerringe 120 hinaus und können dadurch wertvollen Raum innerhalb einer Maschine beanspruchen. Die meist massiven Ausführungen der Labyrinthringe 114, beispielsweise aus Gusseisen wie Grauguss, können durch ihr Eigengewicht zu weiteren Nachteilen bei Montage und Betrieb führen.

Daneben können Großlager auch durch schleifende Dichtringe geschützt werden. Dabei kann es sich im Wesentlichen um Radialwellendichtringe, evtl. mit vorgeschalteter Staubschutzlippe, handeln, die mittels z.B. gegossenen Trägerteilen in Position gehalten werden. Diese Trägerteile können ebenso eine große Masse und damit ein hohes, bei der Montage zu bewegendes Gewicht bedingen. Eine Austauschbarkeit des Dichtringes kann entweder nicht möglich, oder aber mit einem erheblichen Demontage- und Montageaufwand verbunden sein.

Beiden zuletzt genannten Dichtungskonzepten ist die Segregation vom Wälzlager gemein, wodurch eine Befüllung mit Schmierstoff erst im montierten Zustand erfolgen kann. Insofern können die vorgesehenen Dichtungen erst nach Montage der Lager angebracht werden, und eine Schmierstoffbefüllung kann wiederum erst danach erfolgen.

Darüber hinaus sind integrierte Dichtungskonzepte, die rein aus Elastomer z.B. faltenbalgartig ausgeführt sind (siehe Offenlegungsschrift DE 10 2007 036 891 A1), bekannt. Eine werkseitige Vorbefettung kann hier erfolgen. Die notwendige Steifigkeit des Dichtsystems kann für große Lagerdurchmesser jedoch nicht oder nur unzureichend bewerkstelligt werden. Ein Austausch der Dichtung ohne Demontage des Wälzlagers ist auf Grund der geschlossenen Geometrie des Dichtringes zudem, wenn überhaupt, nur erschwert möglich.

Den genannten bestehenden Dichtungskonzepten ist gemein, dass sie nur eine begrenzte maximale Lagerschiefstellung erlauben. Gerade bei winkelbeweglichen Lagern wie Pendelrollenlager oder Kompakt-Anordnungs-Wälzlager (**C**ompact **A**ligning **R**oller **B**earing (CARB) Toroidal-Rollenlager) kann die maximal mögliche Verkippung eines Lagerinnenrings gegenüber einem Lageraußenring stark eingeschränkt sein. Bei Montage des Lagers oder auch im eigentlichen Betrieb kann dies zu einem Anstoßen des Wälzlagerrollensatzes an das Dichtungselement führen. Schäden am Rollensatz, dem Dichtungselement oder gar des Befestigungsmechanismus am jeweiligen Lagerring können die Folge sein, wodurch erhebliche Instandsetzungskosten verursacht werden können, und die Lebensdauer des Lagers beeinträchtigt werden kann.

Daneben können die Trägerteile der schleifenden Dichtringe auch aus geschweißten Blechkonstruktionen gefertigt und im Wälzlager integriert sein, so dass keine Bauteile über die Wälzlageraußenmaße hinausragen. In diesem Fall sollte eine exakte Ausrichtung/Zentrierung der Dichtlippe zur zugehörigen Dichtungs-Gegenlauffläche über eine definierte Referenzposition an dem die Dichtlippe tragenden Bauteil (z.B. Außenring) erfolgen. Die Referenzposition wird in diesen Fällen durch umlaufende Referenznuten, Referenzflächen, Referenzbolu-ungen, Referenzkanten o.ä. realisiert. Diese können auf Grund der geforderten Präzision durch aufwändige und hochgenaue Bearbeitungen, wie beispielsweise Hartdrehen, gefertigt werden. Die genannten Verfahren sind mit hohen Fertigungskosten verbunden. Sollten Bauteile zwischen Referenzposition am tragenden Bauteil und der zu zentrierenden Dichtlippe angeordnet sein, müssen diese ebenso exakt positioniert werden, um in Toleranzkettenbetrachtung die notwendige Exaktheit zu wahren. Auch diese Ausrichtungsanforderungen der Bauteile sind mit Aufwand und Kosten verbunden.

Bei allen Dichtungskonzepten mit schleifenden Dichtringen können abhängig von der Güte der gepaarten Oberflächen (Dichtlippe zu Gegenlauffläche) erhebliche Reibungsverluste entstehen. Diese energetischen Verluste könnten die eigentliche Verlustleistung des Wälzlagers bei weitem übersteigen. Des Weiteren sind mit den genannten Reibverlusten auch Verschleißerscheinungen verbunden. Sowohl Dichtring/Dichtlippe wie auch die zugehörige Gegenlauffläche verschleißen über die Betriebsdauer. Ab einem bestimmten Verschleißfortschritt sollte der Dichtring ausgetauscht werden. Bei verschlissenen Gegenlaufflächen gestaltet sich eine Wiederinstandsetzung weitaus schwerer. Etwaige Riefen können bei externen Dichtkonzepten im Felde durch sogenannte Verschleißhülsen eliminiert werden, deren Montage jedoch aufwändig und mit hohen Kosten verbunden ist. Bei integrierten Dichtkonzepten ist kein Instandsetzungsverfahren bekannt.

Es besteht daher ein Bedarf daran, ein verbessertes Konzept zur Abdichtung von Wälzlagern zu schaffen.

Diesem Bedarf trägt ein Wälzlager mit Dichtungseinheit gemäß Patentanspruch 1 Rechnung.

Ausführungsbeispiele schaffen ein Wälzlager mit einem ersten Lagerring, einem zweiten Lagerring und einer Dichtungseinheit, wobei die Dichtungseinheit ein gegenüber dem ersten und dem zweiten Lagerring verdrehbares, zumindest teilringförmiges Hauptelement umfasst. Bei dem Wälzlager kann es sich beispielsweise um ein Kugellager, ein Tonnenlager, ein Kegelrollenlager, bzw. um ein Lager mit einreihiger oder mehrreihiger Anordnung von Wälzkörpern handeln. Der erste Lagerring kann z.B. an einem Stator befestigt sein. Der zweite Lagerring kann z.B. an einem Rotor befestigt sein. Sowohl der erste Lagerring, als auch der zweite Lagerring könnten ein innerer Lagerring oder ein äußerer Lagerring sein.

Die Dichtungseinheit ist dabei in manchen Ausführungsbeispielen zumindest teilweise aus einem flexiblen, elastischen Material gefertigt. Hierzu können beispielsweise Elastomere, d.h. bestimmte Arten von Plastik bzw. gummiartige Werkstoffe verwendet werden. Der Begriff "Dichtungseinheit" verweist darauf, dass ein Durchdringen bestimmter Substanzen von einer Seite der Dichtungseinheit auf die andere verhindert werden soll. Zu diesen Substanzen können insbesondere Schmutzpartikel (z. B. Ruß, Feinstaub, Sand oder Schlamm), Gase oder Dämpfe (z. B. Sauerstoff, Dämpfe von Kraftstoffen oder Lösungsmitteln, oder auch Dämpfe giftiger oder korrosiver Substanzen) oder Flüssigkeiten (z. B. Wasser, Säure, Lauge, Öl), aber auch Stoffe wie z. B. Schmierfette zählen.

Ein zumindest teilringförmiges Element kann beispielsweise durch einen vollständigen Ring gebildet werden, aber auch durch Teile eines Ringes, beispielsweise durch Segmente. Neben Ringsegmenten sind jedoch auch Ausführungen möglich, bei denen ein Ring beispielsweise aus Teilen mit unregelmäßiger Form zusammengesetzt werden kann. Eine Ausführung in mehreren Teilen eines Ringes könnte die Wartung erheblich erleichtern, da beispielsweise der Ein- und Ausbau derart erfolgen könnte, dass ein vollständiger Ausbau des gesamten Wälzlagers nicht mehr erforderlich ist. Ist das Element beispielsweise segmentiert, kann eine Verbindung der einzelnen Segmente zum Beispiel durch Verbindungsplatten oder Verschraubungen realisiert sein, sie könnte aber auch geklebt oder geschweißt sein.

Die Dichtungseinheit kann in manchen Ausführungsbeispielen wenigstens teilweise aus einem Dichtungswerkstoff gefertigt sein. Ein Dichtungswerkstoff kann beispielsweise ein

Kunststoff (z.B. Polyurethan, Nitrilkautschuk (**N**itrile **B**utadiene **R**ubber (NBR)), Hydrierter Acrylnitrilbutadien-Kautschuk (**H**ydrated **N**itrile **B**utadiene **R**ubber (HNBR)) sein, je nachdem, welche Art von Stoff am Ein- oder Ausdringen gehindert werden soll. Die Dichtungseinheit könnte zumindest teilweise aus Metall, Metalllegierungen, besonders reibungsarmen Kunststoffen wie z. B. **P**oly**t**etra**f**luorethylen (PTFE) oder Kunststoffen mit hoher Steifigkeit gefertigt sein. Kunststoffe hoher Steifigkeit können beispielsweise sogenannte Duroplaste sein.

Weiterhin könnten die verwendeten Materialien eine Massenproduktion durch Verfahren wie Spritzgießen, Vulkanisieren, etc. ermöglichen. Produktions- und Materialkosten sowie Gewicht könnten somit eingespart werden. Die Befestigung könnte form-, kraft- oder stoffschlüssig erfolgen. Mögliche Befestigungsmittel könnten beispielsweise eine Schraube, eine Klebefläche, eine Schweißfläche, eine Lötstelle, eine Niete, eine Bohrung, ein Gewinde oder ein Nut und Feder aufweisendes System umfassen. Der Lagerring des Wälzlagers kann ein Lagerinnenring oder ein Lageraußenring sein. Das Element könnte weiterhin blechartig ausgebildet sein. Ein blechartiges Element könnte auch als dünnes Element verstanden werden; mit anderen Worten könnte eine der drei Raumabmessungen (Dicke) sehr klein gegenüber den anderen beiden Raumabmessungen (Länge, Breite) sein. In Ausführungsbeispielen könnte die Dicke jeweils bis zu 1%, 2 %, 5 %, 10%, etc. der Länge oder Breite betragen. Durch eine blechartige Ausführung des Elementes könnte ein erhebliches Maß an Volumen (Bauraum), und damit auch am Gewicht gespart werden.

Die Dichtungseinheit kann in einigen Ausführungsbeispielen zudem in ein bereits bestehendes Wälzlager integriert werden. Durch den einfachen Aufbau könnte das Konzept auf jedes Wälzlager unabhängig von Design, Lagerserie oder Durchmesser angewandt werden. Die Dichtungseinheit könnte so flexibel eingesetzt werden. Im Vergleich zur konventionellen Lösung der Labyrinthdichtung, wie sie beispielsweise in Windenergieanlagen zum Einsatz kommt, könnte der von einem Schmierstoff auszufüllende Raum erheblich reduziert werden. Hierdurch könnte weniger Bedarf an Schmierstoff auftreten. Die Dichtungseinheit kann in einigen Ausführungsbeispielen zudem aus leichtem Material ausgeführt sein. Dies könnte zu einer Materialkostenreduktion, einer Gewichtsreduzierung und damit zu einer erleichterten, zeiteffizienten Montage führen. Eine werkseitige Vorbefettung könnte eine Verunreinigung während der Montage des sonst ungedichteten, offenen Lagers erschweren oder sogar verhindern.

Die Verdrehbarkeit des Hauptelements gegenüber dem ersten und dem zweiten Lagerring bezieht sich auf eine Drehbarkeit in tangentiale Richtung zu dem ersten, bzw. dem zweiten Lagerring. Mit anderen Worten könnte hierdurch eine freie Rotation des Hauptelements unabhängig von den Lagerringen ermöglicht werden. Eine Rotationsgeschwindigkeit des Hauptelements könnte sich hiermit von den jeweiligen Rotationsgeschwindigkeiten des ersten Lagerrings oder des zweiten Lagerrings unterscheiden. Hierdurch könnte wiederum bei Betrieb des Wälzlagers die Rotationsgeschwindigkeit des Hauptelements bis auf die Hälfte einer Differenz aus der Rotationsgeschwindigkeit des ersten Lagerrings und der Rotationsgeschwindigkeit des zweiten Lagerrings reduziert werden. Reibungskräfte könnten sich dadurch reduzieren oder sogar minimieren und der Verschleiß dadurch verringert werden.

Optional umfasst die Dichtungseinheit in Ausführungsbeispielen zusätzlich mindestens eine zu dem Hauptelement, dem ersten Lagerring oder dem zweiten Lagerring verdrehbare Dichtlippe. Das Hauptelement und die mindestens eine Dichtlippe können einstückig aus demselben Werkstoff oder auch mehrstückig oder aus verschiedenen Werkstoffen gefertigt sein. Unter einer einstückig ausgebildeten Komponente wird eine solche verstanden, die genau aus einem zusammenhängenden Materialstück gefertigt ist. Unter einer einteilig gefertigten, bereitgestellten oder hergestellten Komponente oder Struktur oder einer integral mit wenigstens einer weiteren Komponente oder Struktur gefertigten, bereitgestellten oder hergestellten Komponente oder Struktur wird eine solche verstanden, die ohne eine Zerstörung oder Beschädigung einer der wenigstens zwei beteiligten Komponenten nicht von der wenigstens einen weiteren Komponente getrennt werden kann. Ein einstückiges Bauteil stellt so auch wenigstens ein integral mit einer anderen Struktur des betreffenden Bauteils gefertigtes oder einteiliges Bauteil dar.

Zusätzlich kann die Dichtlippe oder Dichtungseinheit in manchen Ausführungsbeispielen zumindest teilweise aus gummiartigen Werkstoffen, bzw. aus Kunststoffen geringer Steifigkeit, gefertigt sein; dies könnten beispielsweise Elastomere oder einige Thermoplaste sein. Die Verwendung von Dichtungswerkstoffen bei der Fertigung könnte einen geringen Verschleiß an einer Gleitfläche sowie eine gute Abdichtung bewirken. Eventuelle Kollisionen mit Wälzkörpern könnten durch das Material erheblich gedämpft werden. Auch hierbei könnten die verwendeten Materialien eine Massenproduktion durch Verfahren wie Spritzgießen, Vulkanisieren, etc., ermöglichen. Produktions- und Materialkosten sowie Gewicht könnten somit eingespart werden.

Ergänzend oder alternativ berührt in Ausführungsbeispielen eine Dichtfläche der Dichtlippe eine sich radial erstreckende Stirnfläche des Hauptelements, des ersten Lagerrings oder des zweiten Lagerrings oder eine Nut des ersten Lagerrings oder des zweiten Lagerrings. Es stehen also mehrere Möglichkeiten zur Verfügung, an welcher Stelle eine Abdichtung mittels der Dichtlippe erfolgen kann. Diese Stelle könnte einen schleifenden Kontakt zu der Dichtlippe bilden. Diese Stelle könnte eine Nut des ersten oder zweiten Lagerrings mit beliebiger Ausrichtung sein oder auch eine Stirnfläche des ersten oder zweiten Lagerrings, die sich zumindest teilweise in radialer Richtung erstreckt. In diesem Falle könnte die Dichtlippe beispielsweise am Hauptelement befestigt sein. Die das Hauptelement und die Dichtlippe umfassende Dichtungseinheit könnte hierzu einstückig oder einteilig ausgebildet sein.

Die Dichtungseinheit kann aus einem einzigen, oder aus mehreren verschiedenen Werkstoffen gefertigt sein. Außerdem könnten das Hauptelement und die Dichtlippe aus unterschiedlichen Materialien gefertigt sein. Eine andere Möglichkeit wäre, die Abdichtung mittels der Dichtlippe auf einer sich zumindest teilweise radial erstreckenden Stirnfläche des Hauptelements vorzunehmen. Hierzu könnte die Dichtlippe am inneren Lagerring oder am äußeren Lagerring befestigt sein. Die Dichtlippe könnte dann wiederum auf eine abgeschrägte Fläche des Hauptelements angreifen, die sich zumindest teilweise radial erstreckt. Die Angriffsrichtung der Dichtlippe könnte eine axiale Vektorkomponente ungleich Null aufweisen. Die Dichtlippe könnte am inneren oder äußeren Lagerring befestigt, und mit dem Hauptelement gleitend verbunden sein, oder umgekehrt. Grundsätzlich steht der Begriff "Berühren" hier für das Vorhandensein eines gleitenden Kontaktes, oder einer form-, kraft- oder stoffschlüssigen Verbindung. Ferner besteht auch die Möglichkeit, dass die Dichtlippe gleitend mit einem der beiden Lagerringe und dem Hauptelement verbunden ist. Eine Verbindung des Hauptelements zu dem ersten oder zweiten Lagerring des Wälzlagers könnte mittelbar über mindestens eine Dichtlippe hergestellt werden. Die Stelle, an der die Abdichtung mittels der Dichtlippe vorgenommen wird, könnte dem jeweiligen Anwendungsgebiet entsprechend so ausgewählt werden, dass Reibungsverluste reduziert oder sogar minimiert werden. Hierdurch könnte eine Verringerung des Verschleißes sowie eine Verlängerung der Lebensdauer der Dichtlippe erreicht werden.

In Ausführungsbeispielen ist das Hauptelement ergänzend oder alternativ an einem Lagerkäfig des Wälzlagers befestigt. Die Rotationsgeschwindigkeit des Hauptelements ist dadurch durch die Rotationsgeschwindigkeit des Lagerkäfigs bestimmt und mit dieser identisch. Der genaue Wert der Rotationsgeschwindigkeit des Hauptelements könnte dabei von den Laufflächenradien jeweils des Lagerinnenrings und des Lageraußenrings abhängen. Die Rotationsgeschwindigkeit des Hauptelements ist dabei in der Regel niedriger als die Geschwindigkeit des rotierenden Lagerrings relativ zu dem stehenden Lagerring. Beispielsweise könnte die Geschwindigkeit des Hauptelements ein Drittel der Geschwindigkeit des rotierenden Lagerrings betragen. Hierdurch könnte die auftretende Reibung an den Gleitflächen reduziert oder sogar minimiert werden. An der Dichtungseinheit auftretender Verschleiß könnte dadurch weiter reduziert werden. Durch die Befestigung des Hauptelements an dem Lagerkäfig könnte eine Kollision der Wälzkörper mit dem Hauptelement (etwa bei zu starker Verkippung eines Pendelrollenlagers) ausgeschlossen werden.

Die Dichtlippe weist ergänzend oder alternativ eine Dichtfläche zum Abdichten an dem Hauptelement auf und ist an dem ersten Lagerring oder dem zweiten Lagerring befestigt. Die Dichtlippe könnte dann mit der Geschwindigkeit des ersten oder des zweiten Lagerringes rotieren, während das Hauptelement eine andere Rotationsgeschwindigkeit als die Dichtlippe aufweist. Reibungskräfte könnten durch die Wahl des Kunststoffes, aus dem beispielsweise das Hauptelement gefertigt sein könnte, nochmals reduziert werden. Ein geeigneter Kunststoff hierfür wäre beispielsweise PTFE. In einem weiteren Ausführungsbeispiel könnten der erste Lagerring und der zweite Lagerring jeweils eine Dichtlippe aufweisen, sodass bei Betrieb des Wälzlagers eine differenzielle Rotation zwischen dem ersten Lagerring mit Dichtlippe, dem Hauptelement und dem zweiten Lagerring mit Dichtlippe zustande kommen könnte.

Ergänzend oder alternativ weist die Dichtlippe eine Dichtfläche zum Abdichten an dem ersten Lagerring oder dem zweiten Lagerring auf und ist an dem Hauptelement befestigt. In diesen Ausführungsbeispielen kann es beispielsweise auch möglich sein, die Dichtlippe und das Hauptelement einteilig oder einstückig zu fertigen. Hierdurch könnte die Herstellung erheblich erleichtert werden. Wiederum könnten mehrere Dichtlippen vorhanden sein, die jeweils im gleitenden Kontakt mit dem ersten Lagerring und dem zweiten Lagerring stehen. Eine solche Konstruktion könnte beispielsweise lediglich durch Nuten an dem ersten Lagerring und dem zweiten Lagerring in Position gehalten werden. Auch könnte eine solche Konstruktion in einem Pendelrollenlager zum Einsatz kommen und bei zu starker Verkippung des Pendelrollenlagers aus den Nuten der Lagerringe herausspringen. Dadurch könnte beispielsweise eine Kollision mit den Wälzkörpern zuverlässig verhindert werden. Hauptelement und Dichtlippe könnten jedoch auch aus unterschiedlichen Werkstoffen gefertigt sein, wie bereits gesagt wurde. In diesem Falle könnte eine hohe Steifigkeit der Dichtungseinheit erzielt werden und gleichzeitig die dichtende Funktion der Dichtlippe durch entsprechende Materialwahl erhalten bleiben. Diese Konstruktion aus Hauptelement und Dichtlippe könnte, wie bereits beschrieben, von Nuten der Lagerringe getragen werden oder auch an dem Lagerkäfig befestigt sein. Ist die Dichtungseinheit nur durch Nuten an den Lagerringen in ihrer Position gehalten, könnte sie sich die Rotationsgeschwindigkeit der Dichtungseinheit je nach auftretendem Reibungswiderstand an den beiden Nuten auf ein energetisch günstiges Maß einstellen. Dies könnte einer Rotationsgeschwindigkeit entsprechen, bei der die Summe der auftretenden Reibungskräfte oder der Gesamtverschleiß gering gehalten wird. In Ausführungsbeispielen, bei dem die Dichtungseinheit zusätzlich am Lagerkäfig befestigt ist, ist die Rotationsgeschwindigkeit durch den Lagerkäfig vorgegeben. Der genaue Wert der Rotationsgeschwindigkeit könnte aber beispielsweise durch die Wahl des Radius der Wälz-körper oder des Lagerinnenrings oder des Lageraußenrings weiter beeinflusst werden.

Optional ist bei einem solchen Ausführungsbeispiel, bei dem die Dichtlippe eine Dichtfläche zum Abdichten einem ersten Lagerring oder dem zweiten Lagerring aufweist und an dem Hauptelement befestigt ist, das Hauptelement oder die mindestens eine Dichtlippe nach Montage in den Wälzlagern symmetrisch zu einer senkrecht zu einer Rotationsachse des Wälzlagers stehenden Ebene ausgeführt. Befindet sich also das Lager in Ruhestellung, kann das Hauptelement oder die Dichtlippe, bezogen auf eine sich radial erstreckende Ebene eine Symmetrie (mit anderen Worten, eine Spiegelsymmetrie) aufweisen. Anders ausgedrückt könnte jede von zwei Seitenflächen den Wälzkörpern zu- oder auch abgewandt sein. Montagefehler durch ein eventuelles Vertauschen der "Innenseite" und der "Außenseite" könnte durch die Symmetrie ausgeschlossen werden. Wartungs- und Montageaufwand könnten dadurch vereinfacht werden. Auch könnte die Herstellung der Dichtlippe beziehungsweise des Hauptelements durch die Symmetrie vereinfacht werden. Die Rotationsachse könnte hierbei eine Rotationsachse in einem nicht verkippten Lager sein, in einem Pendelrollenlager jedoch auch eine Rotationsachse eines verkippten Lagerrings des Lagers.

Ergänzend oder alternativ sind das Hauptelement oder die Dichtlippe in Ausführungsbeispielen untereinander und/oder mit dem ersten Lagerring, dem zweiten Lagerring oder dem Lagerkäfig austauschbar verbindbar. Mit anderen Worten können das Hauptelement oder die Dichtlippe beispielsweise einzeln austauschbar verbindbar sein. Ferner könnten das Hauptelement und die mindestens eine Dichtlippe eine bauliche Einheit bilden (miteinander verbunden sein) und als Einheit mit dem ersten Lagerring, dem zweiten Lagerring oder dem Lagerkäfig austauschbar verbindbar sein. Austauschbar verbindbar bedeutet hierbei, dass eine aufwandsarme Entfernung ermöglicht sein kann (beispielsweise kein Werkzeuggebrauch), dass eine beschädigungsfreie Entfernung möglich ist, dass eine Verbindung lösbar und wieder herstellbar ist, dass das Hauptelement oder die Dichtlippe mehrfach verbindbar, auswechselbar sind oder dass das Hauptelement oder die Dichtlippe reversibel verbindbar sind. Montage- und Wartungsprozesse könnten durch die austauschbare Verbindbarkeit beschleunigt und vereinfacht werden. Außerdem könnte verhindert werden, dass bei einer Entfernung des Hauptelements oder der Dichtlippe, beispielsweise zu Wartungszwecken, diese oder weitere Teile des Lagers durch Beschädigung verschleißen oder gar unbrauchbar gemacht werden.

In Ausführungsbeispielen weist das Wälzlager ergänzend oder alternativ einen Außendurchmesser oder einen Außenradius von mindestens 400 mm auf. Der Durchmesser bzw. Radius kann radial zu einer Rotationsachse des Lagers gemessen werden. Lager mit einem Außendurchmesser oder -radius von 400 mm oder mehr werden häufig auch als "Großlager" bezeichnet. Großlager können beispielsweise im Bereich der Energiegewinnung (z.B. Windkraftwerke, Unterwasserkraftwerke, Turbinen allgemein) zum Einsatz kommen. Eine Wartung, Montage oder ein Austausch einer konventionellen Dichtung kann bei einem Großlager mit erheblichem Aufwand verbunden sein. Die Ausführung des Elementes in mehreren Scheiben- oder Ringteilen könnte diesen Aufwand erheblich reduzieren. Eine Abdichtung von Großlagern mittels der beschriebenen Dichtungseinheit könnte erhebliche Mengen an Material und somit auch an Gewicht sparen. Auch könnten Fertigungskosten und Fertigungsaufwand in erheblichem Maße reduziert werden. Auch könnte eine Montage der Dichtungseinheit an dem Lager sowohl vor als auch nach der Montage des Lagers selbst erfolgen.

Ergänzend oder alternativ sind der erste Lagerring und der zweite Lagerring in Ausführungsbeispielen in einem begrenzten Winkel gegeneinander verkippbar. Dies kann zum Beispiel in einem Pendelrollenlager der Fall sein. Die maximal mögliche Verkippung zweier Lagerringe gegeneinander kann einen Bruchteil eines Grades, aber auch mehrere Grad, zum Beispiel 2 oder 3 Grad betragen. Die Dichtungseinheit könnte an einem inneren Lagerring befestigt sein, so dass eine Kollision mit den Wälzkörpern bei einer Verkippung der beiden Lagerringe gegeneinander vermieden werden könnte. Die Verwendung einer Dichtlippe, die zum Beispiel aus Elastomer gefertigt sein kann, könnte den Lagerring bei Verkippung so viel Spielraum ermöglichen, dass die dichtende Funktion der Dichtlippe auch bei Verkippungen, beispielsweise um ein oder zwei Grad, erhalten bliebe. Ist die Dichtungseinheit an dem äußeren Lagerring befestigt, könnte beispielsweise eine Fertigung der Dichtungseinheit aus Kunststoff bei starker Verkippung beider Lagerringe zueinander Schäden deutlich verringern, die durch eine Kollision der Dichtungseinheit mit den Wälzkörpern entstehen könnten.

Ferner weist die Dichtungseinheit ergänzend oder alternativ in Ausführungsbeispielen mindestens eine flüssigkeitsdurchlässige Bohrung auf. Sind in die Dichtungseinheit solche sogenannten Fettauslassbohrungen eingearbeitet, könnte z.B. mittels Schläuchen oder direkt an den Bohrungen befestigten Sammelbehältern verbrauchter Schmierstoff effizient und gelenkt abgeführt bzw. zugeführt werden. Somit könnte eine Verschmutzung umgebender Bauteile und des umgebenden Raumes vermieden werden.

Nachfolgend werden unter Bezugnahme auf die beigefügten Figuren Ausführungsbeispiele näher beschrieben und erläutert. Es zeigen:
Fig. 1 eine Dichtungseinheit in einem Wälzlager gemäß einem ersten Ausführungsbeispiel;
Fig. 2 eine Detailansicht einer Dichtungseinheit in einem Wälzlager gemäß einem ersten Ausführungsbeispiel;
Fig. 3 eine Dichtungseinheit in einem Wälzlager gemäß einem zweiten Ausfüh-ungsbeispiel;
Fig. 4 eine perspektivische Ansicht einer Dichtungseinheit in einem Wälzlager gemäß einem zweiten Ausführungsbeispiel;
Fig. 5 ein Anwendungsbeispiel einer Dichtungseinheit gemäß einem zweiten Ausführungsbeispiel in einem Pendelrollenlager;
Fig. 6 ein Wälzlager mit Dichtungseinheit in Aufsicht gemäß einem zweiten Ausführungsbeispiel;
Fig. 7 einen Querschnitt durch ein Wälzlager mit Dichtungseinheit in Seitenansicht gemäß einem zweiten Ausführungsbeispiel;
Fig. 8 einen Querschnitt durch ein Wälzlager mit Dichtungseinheit in perspektivischer Ansicht gemäß einem zweiten Ausführungsbeispiel;
Fig. 9 eine Dichtungseinheit in einem Wälzlager gemäß einem dritten Ausführungsbeispiel;
Fig. 10 eine perspektivische Ansicht einer Dichtungseinheit in einem Wälzlager gemäß einem dritten Ausführungsbeispiel;
Fig. 11 ein Wälzlager mit Dichtungseinheit in Aufsicht gemäß einem dritten Ausführungsbeispiel;
Fig. 12 einen Querschnitt durch ein Wälzlager mit Dichtungseinheit in Seitenansicht gemäß einem dritten Ausführungsbeispiel;
Fig. 13 einen Querschnitt durch ein Wälzlager mit Dichtungseinheit in perspektivischer Ansicht gemäß einem dritten Ausführungsbeispiel; und
Fig. 14 einen konventionellen Aufbau einer Labyrinthdichtung gemäß einem Vergleichsbeispiel.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Im Folgenden verweisen einem Bezugszeichen angehängte Kleinbuchstaben "a", "b" und "c" jeweils auf verschiedene Ausführungsbeispiele. So können etwa die Bezugszeichen "10a" und "10b" zwei Entsprechungen derselben Komponente in jeweils unterschiedlichen Ausführungsformen bezeichnen.

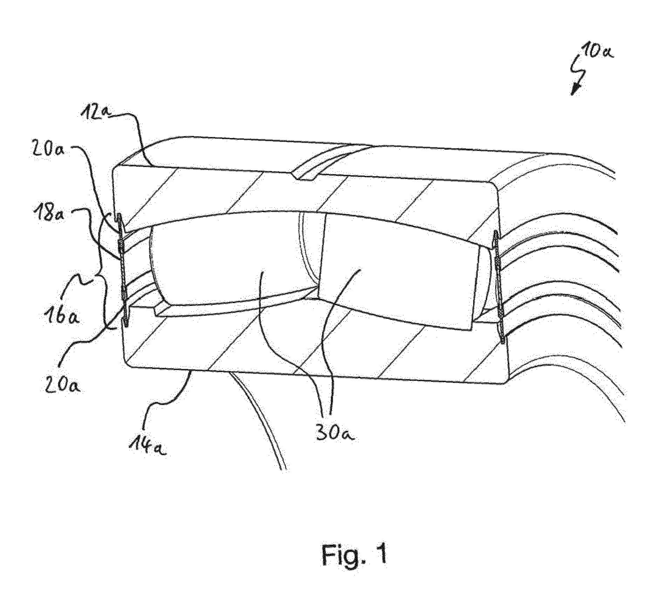

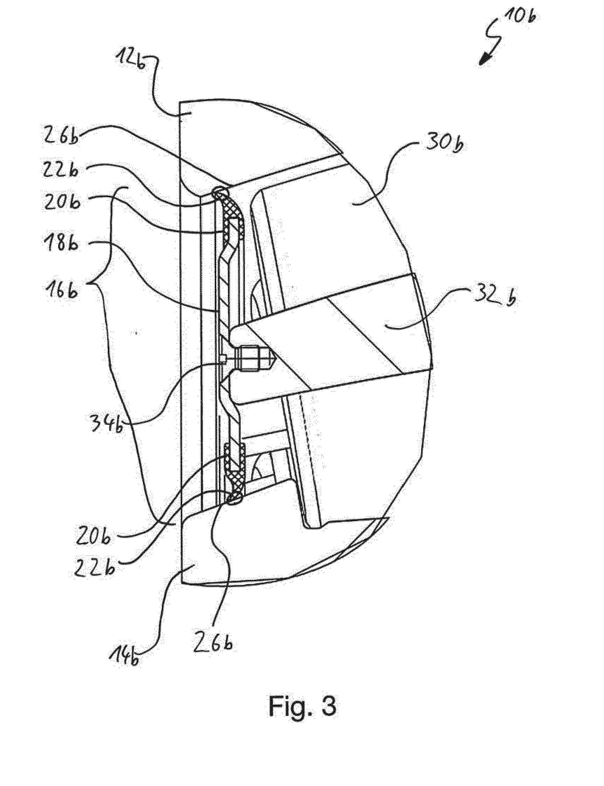

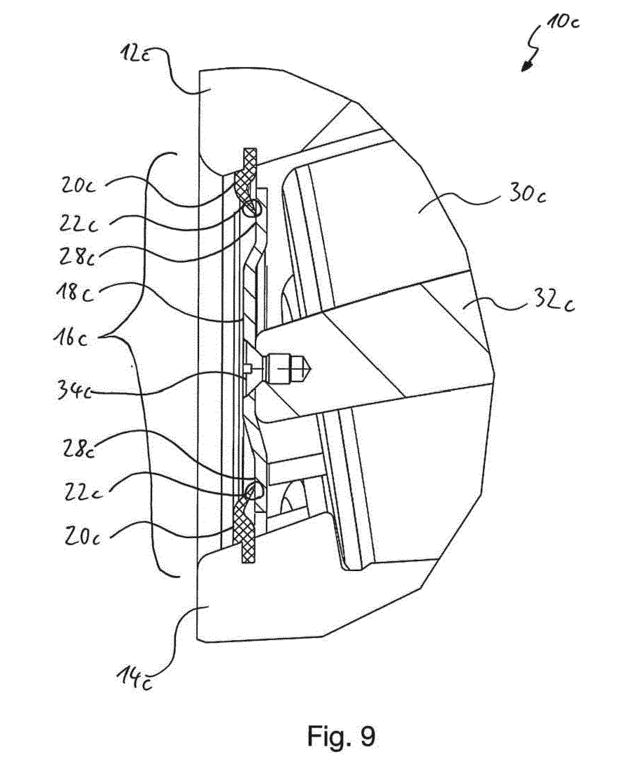

Nachfolgend wird ein erstes Ausführungsbeispiel anhand der Fig. 1-2, ein zweites Ausführungsbeispiel anhand der Fig. 3-8 und ein drittes Ausführungsbeispiel anhand der Fig. 9-13 beschrieben.

Ausführungsbeispiele beziehen sich auf ein Wälzlager mit einem ersten Lagerring, einem zweiten Lagerring und einer Dichtungseinheit, wobei die Dichtungseinheit ein gegenüber dem ersten Lagerring und dem zweiten Lagerring verdrehbares, zumindest teilringförmiges Hauptelement umfasst. Ein erstes Ausführungsbeispiel hierfür ist in Fig. 1 dargestellt. Zu sehen ist ein perspektivischer Querschnitt durch ein Wälzlager 10a, welches einen ersten Lagerring 12a, einem zweiten Lagerring 14a sowie zwei Reihen von Wälzkörpern 30a umfasst. Im hiesigen Ausführungsbeispiel entspricht der erste Lagerring 12a dem äußeren Lagerring und der zweite Lagerring 14a dem inneren Lagerring. Diese Anordnung kann jedoch auch umgekehrt sein. Die Wälzkörper 30a sind tonnenförmig ausgebildet und in zwei Reihen angeordnet, die von zwei Laufrillen im inneren Lagerring 14a geführt werden. Die Wälzkörper 30a; 30b; 30c, können in anderen Ausführungsbeispielen auch andere Formen aufweisen, beispielsweise eine Kugelform, Zylinderform oder Kegelform. Die Anordnung der Wälzkörper kann einreihig oder mehrreihig sein. Das Wälzlager 10a weist weiterhin eine Dichtungseinheit 16a auf.

In den drei vorgestellten Ausführungsbeispielen (s. Fig. 1-13) kann die Dichtungseinheit 16a; 16b; 16c zusätzlich mindestens eine zu dem Hauptelement 18a; 18b; 18c, dem ersten Lagerring 12a; 12b; 12c oder dem zweiten Lagerring 14a; 14b; 14c, verdrehbare Dichtlippe 20a; 20b; 20c, umfassen. Die Dichtungseinheit 16a in Fig. 1 umfasst ein dünnes, blechförmiges Hauptelement 18a, sowie zwei Dichtlippen 20a. In diesem ersten Ausführungsbeispiel sind die Dichtlippen 20a gegenüber dem äußeren Lagerring 12a und dem inneren Lagerring 14a, jedoch nicht gegenüber dem Hauptelement 18a, frei verdrehbar. Das Hauptelement 18a ist gegenüber den Lagerringen 12a und 14a frei verdrehbar. Das Hauptelement könnte segmentiert oder aus einem Stück gefertigt sein. Fig. 1 zeigt beispielsweise ein einstückig ausgebildetes Hauptelement 18a. Im Falle der Segmentierung könnte die Verbindung der einzelnen Segmente beispielsweise durch Verbindungsplatten und Verschraubungen realisiert sein, oder auch geklebt, geschweißt, etc. sein. An dem Hauptelement 18a sind zwei Dichtlippen 20a befestigt. In anderen Ausführungsbeispielen könnten jedoch auch nur eine Dichtlippe oder gar mehr als zwei Dichtlippen vorhanden sein.

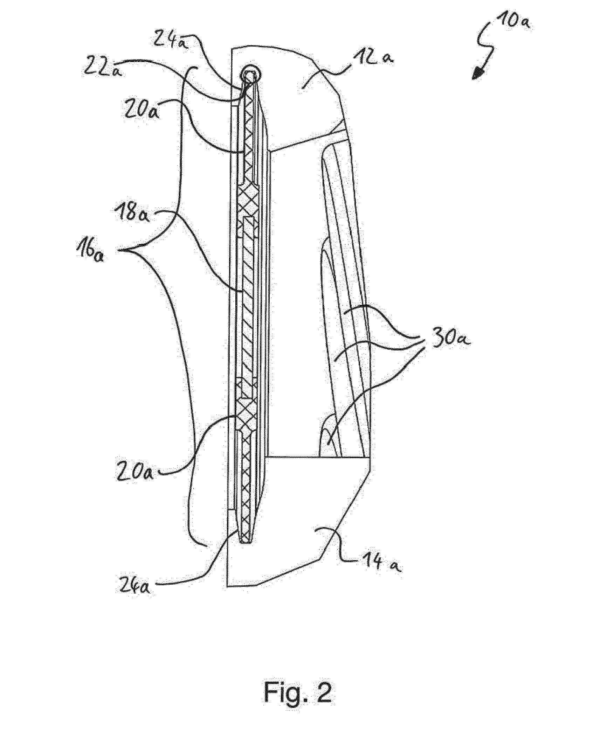

Das erste Ausführungsbeispiel wird in Fig. 2 nochmals verdeutlicht. Der Querschnitt durch das Wälzlager 10a ist hier in Draufsicht gezeigt. Hierbei ist lediglich ein Ausschnitt gezeigt, der einen Querschnitt durch die Dichtungseinheit 16a zeigt, und einen teilweisen Querschnitt durch den äußeren Lagerring 12a, den inneren Lagerring 14a, sowie die Wälzkörper 30a. Das Hauptelement 18a ist wiederum mit den Dichtlippen 20a fest verbunden. In den drei Ausführungsbeispielen kann die Dichtlippe 20a; 20b; 20c eine Dichtfläche 22a; 22b; 22c zum Abdichten an den ersten Lagerring 12a; 12b; 12c oder dem zweiten Lagerring 14a; 14b; 14c aufweisen und an dem Hauptelement 18a; 18b; 18c befestigt sein. In Fig. 2 weist die Dichtlippe 20a eine der Befestigung an dem Hauptelement 18a gegenüber liegende Dichtfläche 22a auf, wobei das vorliegende erste Ausführungsbeispiel zwei Dichtlippen 20a umfasst. Deren Dichtflächen 22a befinden sich jeweils in Kontakt mit dem ersten Lagerring 12a und dem zweiten Lagerring 14a.

Wie die anhand der Fign. beschriebenen drei Ausführungsbeispiele zeigen, berührt die Dichtfläche 22a; 22b; 22c der Dichtlippe 20a; 20b; 20c eine sich radial erstreckende Stirnfläche des Hauptelements 18a; 18b; 18c des ersten Lagerrings 12a; 12b; 12c oder des zweiten Lagerrings 14a; 14b; 14c oder eine Nut 24a des ersten Lagerrings 12a; 12b; 12c oder des zweiten Lagerrings 14a; 14b; 14c.

In Fig. 2 weisen sowohl der äußere Lagerring 12a als auch der innere Lagerring 14a eine Nut 24a auf. Diese Nuten werden von den Dichtflächen 22a der Dichtlippen 20a berührt. Mit anderen Worten erfolgt durch die Dichtlippen 20a eine Abdichtung an den Nuten 24a. Die gesamte Dichtungseinheit 16a, ist in Fig. 2 lose in die beiden Nuten 24a eingelegt. Die Dichtungseinheit 16a könnte, alternativ zu der in Fig. 2 gezeigten Ausführung auch einstückig ausgeführt sein. Die in den Fign. gezeigten Ausführungsbeispiele zeigen, dass in manchen Ausführungsbeispielen die Dichtungseinheit 16a; 16b; 16c das Hauptelement 18a; 18b; 18c oder die Dichtlippen 20a; 20b; 20c zumindest teilweise zum Beispiel aus Elastomer, Blech, oder Kunststoff gefertigt sein können. Durch die lose Anordnung (gleitender Kontakt der Dichtflächen 22a, der Dichtlippen 20a, zu den Nuten 24a, der Lagerringe 12a und 14a) könnten die Relativgeschwindigkeiten zwischen den Dichtflächen 22a und den Nuten 24a, die der Dichtlippe 20a als Gegenlauffläche dienen, bis auf einen Faktor ½ reduziert werden. Je nach Reibungsverhältnissen könnte jedoch auch die Relativgeschwindigkeit am äußeren Lagerring um weniger als die Hälfte und am inneren Lagerring um gleichzeitig um mehr als die Hälfte reduziert werden oder umgekehrt. In Fig. 2 ist weiterhin zu erkennen, dass die beiden Lagerringe 12a und 14a in axialer Richtung, von den Wälzkörpern 30a weg, nicht von der Dichtungseinheit 16a überragt werden. Dadurch könnte es beispielsweise möglich sein, einen von der internationalen Organisation für Normung (ISO, von griech.: isos = gleich) vorgegebenen Bauraum einzuhalten.

In den in den Fign. gezeigten Ausführungsbeispielen ist das Hauptelement 18a; 18b; 18c, oder die mindestens eine Dichtlippe 20a; 20b; 20c, nach Montage in dem Wälzlager 10a; 10b; 10c symmetrisch zu einer senkrecht, zu einer Rotationsachse des Wälzlagers 10a; 10b; 10c, stehenden Ebene ausgeführt. In Fig. 2 wird deutlich, dass die den Wälzkörpern 30a zugewandte Seite der Dichtungseinheit 16a und die den Wälzkörpern 30a abgewandte Seite der Dichtungseinheit 16a spiegelsymmetrisch zueinander ausgeführt sind. Durch einen solchen symmetrischen Aufbau könnten mögliche Montagefehler ausgeschlossen werden.

Fig. 3 zeigt eine Dichtungseinheit 16b in einem Wälzlager 10b, gemäß einem zweiten Ausführungsbeispiel. Das Wälzlager umfasst wiederum einen äußeren Lagerring 12b, einen Lagerinnenring 14b sowie mehrere Wälzkörper 30b. Die Wälzkörper 30b sind ferner in einem Lagerkäfig 32b angeordnet. Die Dichtungseinheit 16b umfasst wiederum ein Hauptelement 18b, welches blechförmig ausgebildet ist sowie zwei Dichtlippen 20b, die an dem Hauptelement befestigt sind. Die beiden Lagerringe 12b und 14b weisen diesmal je eine Stirnfläche 26b auf, die jeweils von den Dichtflächen 22b der beiden Dichtlippen 20b berührt werden. Die Stirnflächen 26b des Lagerrings 12b und 14b könnten kostengünstig während des Schleifprozesses der Laufbahnen für die Wälzkörper 30b hergestellt werden. Hierdurch könnte eine sehr gute Qualität dieser Stirnflächen 26b erreicht werden.

In dem zweiten und dritten Ausführungsbeispiel ist das Hauptelement 18b; 18c ferner an einem Lagerkäfig 32b; 32c des Wälzlagers 10b; 10c befestigt. In Fig. 3 ist das Hauptelement 18b mit einem Befestigungsmittel 34b an dem Lagerkäfig 32b befestigt. Das hier dargestellte Befestigungsmittel 34b stellt eine Schraube dar, was jedoch nur beispielhaft zu verstehen ist. Das Befestigungsmittel 34b könnte genauso beispielsweise eine Löt-, Klebeoder Schweißfläche sein oder ein Bolzen oder eine Steck- bzw. Klemmverbindung. Allgemein könnte das Hauptelement 18b form-, kraft- oder stoffschlüssig an dem Lagerkäfig 32b befestigt sein. Das Hauptelement 18b könnte z. B. aus Stahl, Leichtmetall oder Kunststoff gefertigt sein. Dadurch, dass das Hauptelement 18b an dem Lagerkäfig 32b befestigt ist, reduziert sich dessen Umlaufgeschwindigkeit im Vergleich zu einem rotierenden Lagerring 12b oder 14b. Durch die damit einhergehende, mögliche Reduktion von Reibungskräften und Verschleiß könnten höhere Drehzahlen des Lagers ermöglicht werden.

In manchen Ausführungsbeispielen können das Hauptelement 18a; 18b; 18c oder die Dichtlippe 20a; 20b; 20c untereinander und/oder mit dem ersten Lagerring 12a; 12b; 12c, dem zweiten Lagerring 14a; 14b; 14c oder dem Lagerkäfig 32b; 32c austauschbar verbindbar sein. Die Komponenten 12c; 14c; 18c; 20c; 32c werden im Folgenden anhand eines dritten Ausführungsbeispiels näher erläutert. In Fig. 3 beispielsweise ist eine austauschbare Verbindung zwischen dem Hauptelement 18b und dem Lagerkäfig 32b durch die Schraube 34b realisiert. Ferner könnten die Dichtlippen 20b auf das Hauptelement 18b geklemmt sein und somit ein weiteres Beispiel für eine austauschbare Verbindung darstellen.

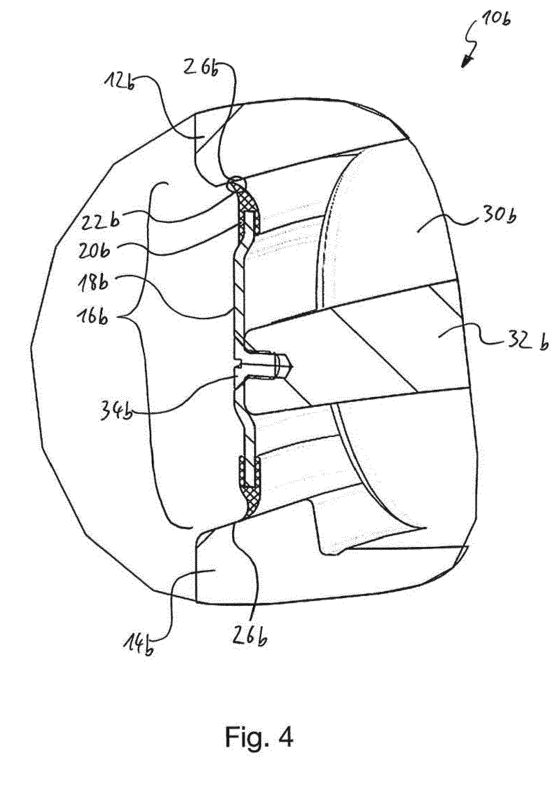

Zur besseren Veranschaulichung ist das Wälzlager 10b mit der Dichtungseinheit 16b in Fig. 4 ausschnittsweise noch einmal aus einer anderen Perspektive gezeigt. Es handelt sich hierbei wiederum um das bereits in Fig. 3 gezeigte zweite Ausführungsbeispiel. In Fig. 3 sowie in Fig. 4 ist zu erkennen, dass das Hauptelement 18b jeweils an seiner äußeren und an seiner inneren Kante, an der die Dichtlippen 20b befestigt sind, einen Einzug in Richtung der Wälzkörper 30b aufweist. Hierdurch greifen die Dichtlippen 20b näher bei den Wälzkörpern (also weiter innen) an den Stirnflächen 26b der Lagerringe 12b und 14b an. Im Falle eines Pendelrollenlagers könnte dadurch mehr Spielraum bei Verkippungen, also eine größere mögliche Verkippung des Lagers erzielt werden.

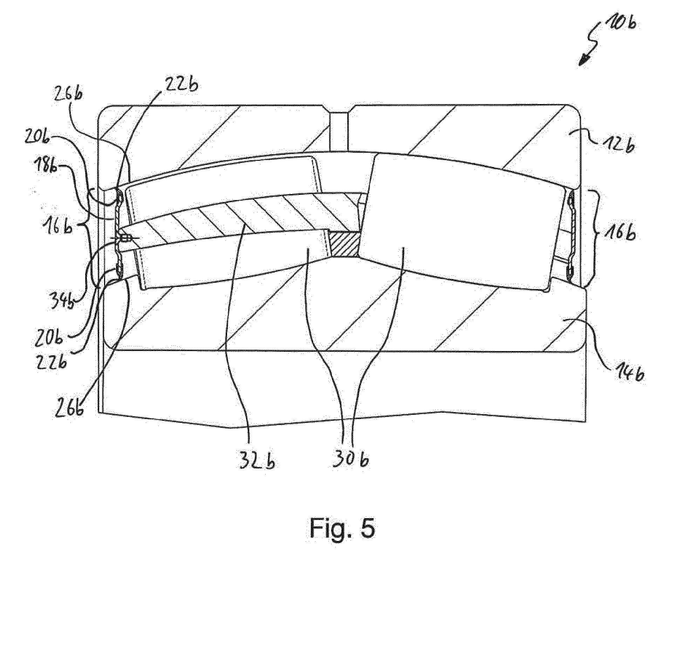

In manchen Ausführungsbeispielen sind der erste Lagerring 12a; 12b; 12c und der zweite Lagerring 14a; 14b; 14c in einem begrenzten Winkel gegeneinander verkippbar. Derartige Lager werden auch als Pendelrollenlager bezeichnet. Die maximale Verkippung zwischen zwei Lagerringen kann in Ausführungsbeispielen bis zu 0,5°, 1°, 2° oder 5° betragen. Fig. 5 zeigt eine frontale Querschnittsansicht durch ein Pendelrollenlager 10b, bei dem der innere Lagerring 14b gegenüber dem äußeren Lagerring 12b um ein kleines Stück im Uhrzeigersinn verkippt ist. Die Wälzkörper 30b, die im vorliegenden Ausführungsbeispiel in zwei Reihen angeordnet sind, werden hierbei durch ein Führungsprofil des Lagerinnenrings 14b mitbewegt. Ebenso wird der die Wälzkörper 30b teilweise umgebende Lagerkäfig 32b mit den Wälzkörpern mitgeführt. Da das Hauptelement 18b mittels des Befestigungsmittels 34b an dem Lagerkäfig 32b befestigt ist, werden das Hauptelement 18b und die Dichtlippen 20b (also die gesamte Dichtungseinheit 16b) ebenfalls mit den Wälzkörpern mit bewegt. Eine Kollision der Wälzkörper 30b mit der Dichtungseinheit 16b bei Verschwenkung des Pendelrollenlagers 10b könnte dadurch vermieden werden. In dem in Fig. 5 gezeigten, zweiten Ausführungsbeispiel kann die Dichtlippe 20b, die mit der Stirnfläche 26b des inneren Lagerrings 14b in Kontakt steht, in axialer Richtung stets an derselben Position in Kontakt mit der Stirnfläche 26b verbleiben. Die Dichtlippe 20b, die dagegen mit der Stirnfläche 26b des äußeren Lagerrings 12b in Berührung steht, kann bei Verschwenkung entlang der Stirnfläche 26b des äußeren Lagerrings 12b (die gleichzeitig die Lauffläche des Lagerrings 12b ist), in axialer Richtung verschoben werden.

In Fig. 5 ist weiterhin zu erkennen, dass hier zwei Dichtungseinheiten 16b zu beiden Seiten des Wälzlagers 10b angebracht sind. Trotz Verkippung des Wälzlagers 10b überragt keine der beiden Richtungseinheiten 16b einen der Lagerringe 12b oder 14b in axialer Richtung. Das Wälzlager 10b mit der Dichtungseinheit 16b könnte also auch unter Berücksichtigung der Verkippung sehr platzsparend ausgeführt werden.

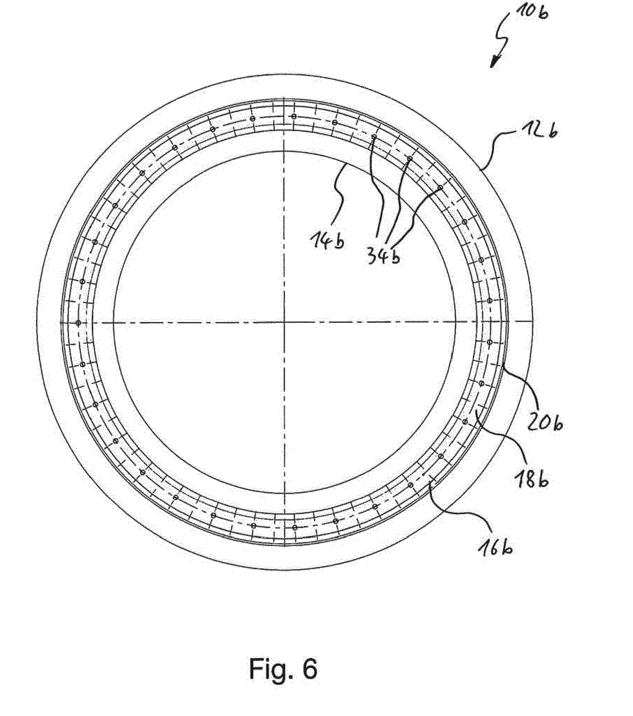

Das Wälzlager 10b mit der Dichtungseinheit 16b ist in Fig. 6 noch einmal in Aufsicht gezeigt. Das Wälzlager 10b und die Dichtungseinheit 16b sind hierbei vollständig abgebildet. Zwei gestrichelte Linien markieren an ihrem Kreuzungspunkt einen Mittelpunkt, durch den die Rotationsachse des Lagers 10b in nicht verkipptem Zustand verläuft. Wie in Fig. 6 gezeigt, können durchaus mehrere Befestigungsmittel 34b (hier eine Mehrzahl an Schrauben) zur Befestigung des Hauptelementes 18b an dem Lagerkäfig 32b verwendet werden.

In manchen Ausführungsbeispielen kann das Wälzlager 10a; 10b; 10c einen Außendurchmesser oder einen Außenradius von mindestens 400 mm aufweisen. Der Durchmesser des Wälzlagers 10b wird hierbei entlang einer geraden Strecke gemessen, deren Verlauf an einer dem Mittelpunkt abgewandten Seite des äußeren Lagerrings 12b beginnt, durch den Mittelpunkt verläuft und an einer gegenüberliegenden, dem Mittelpunkt ebenfalls abgewandten Seite des Lageraußenrings 12b endet. Beispielsweise könnte ein solcher Verlauf einer Strecke einer der beiden in Fig. 6 gezeigten gestrichelten Linien folgen.

Man erkennt weiterhin in Fig. 6, dass die Dichtungseinheit 16b eine Ringform aufweist. Die Dichtungseinheit könnte jedoch auch in Form von Ringsegmenten ausgebildet sein. Beispielsweise könnte eine Dichtungseinheit 16a; 16b; 16c aus zwei teilringförmigen Segmenten zusammengesetzt sein, welche jeweils einem ringförmigen Verlauf von 180° folgen oder die Dichtungseinheit 16b könnte beispielsweise auch aus vier teilringförmigen Segmenten zusammengesetzt sein, welche jeweils einem ringförmigen Verlauf von 90° folgen. Die teilringförmigen Segmente könnten jedoch auch unterschiedlich groß sein.

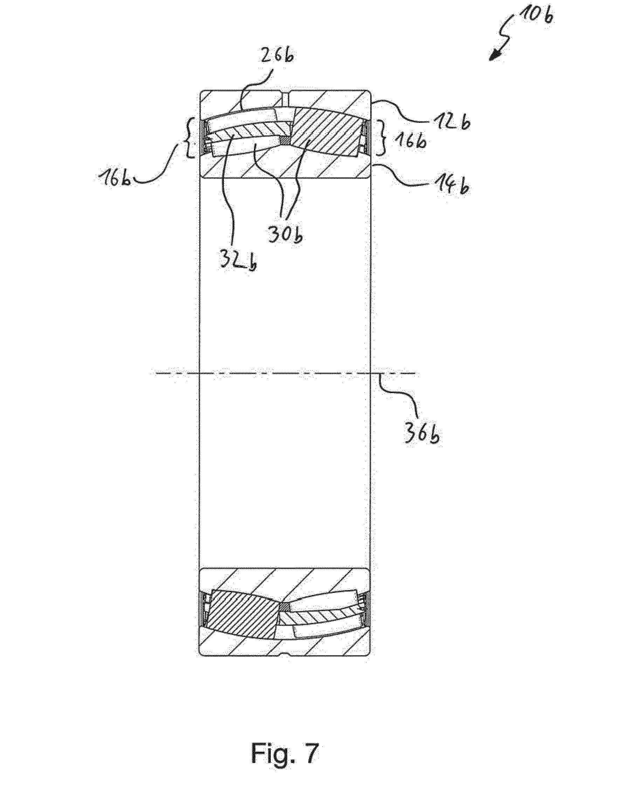

Fig. 7 zeigt nochmals einen Querschnitt durch das Wälzlager 10b mit Dichtungseinheit 16b in Seitenansicht gemäß dem zweiten Ausführungsbeispiel. Das Wälzlager 10b ist hierbei in seiner vollen Größe zu erkennen. Es sind wiederum zwei Dichtungseinheiten 16b an beiden Seiten des Lagers 10b vorhanden. Eine gestrichelte Linie markiert die Mittelachse 36b bzw. die Rotationsachse des Wälzlagers 10b in nicht verkipptem Zustand. Weiterhin wird deutlich, dass die Lauffläche des äußeren Lagerrings 12b (oder die Stirnfläche 26b des äußeren Lagerrings 12b) teilweise der Oberfläche einer Kugel folgt. Dies kann eine Verkippung des inneren Lagerrings 14b gegenüber dem äußeren Lagerring 12b ermöglichen, wobei die Wälzkörper 30b auf dem Profil des inneren Lagerrings 14b mitgeführt werden können.

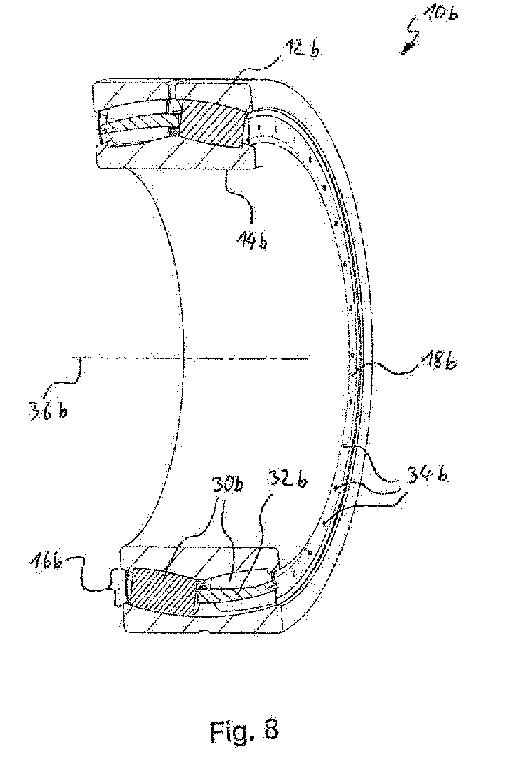

Fig. 8 zeigt denselben Querschnitt wie Fig. 7 durch das Wälzlager 10b mit Dichtungseinheit 16b, diesmal in perspektivischer Ansicht.

In den in den Fign. gezeigten Ausführungsbeispielen weist die Dichtlippe 20a; 20b; 20c eine Dichtfläche 22a; 22b; 22c zum Abdichten an dem Hauptelement 18a; 18b ; 18c auf und ist an dem ersten Lagerring 12a; 12b; 12c oder dem zweiten Lagerring 14a; 14b; 14c befestigt. Ein solches, drittes Ausführungsbeispiel eines Wälzlagers 10c mit einer Dichtungseinheit 16c ist in Fig. 9 gezeigt. Der Ausschnitt in Fig. 9 zeigt einen Querschnitt durch die Dichtungseinheit 16c, sowie Teile der Lagerringe 12c und 14c, des Lagerkäfigs 32c und der Wälzkörper 30c. Im Unterschied zu dem zweiten Ausführungsbeispiel sind hier die Dichtlippen 20c jeweils am inneren Lagerring 14c und am äußeren Lagerring 12c befestigt. In Fig. 9 sind die Dichtlippen 20c jeweils in eine Nut an dem äußeren Lagerring 12c bzw. dem inneren Lagerring 14c eingebracht. Diese Verbindung könnte in anderen Ausführungsbeispielen auch z. B. mittels Kleben oder Vulkanisieren erzeugt werden. Die beiden Dichtlippen 20c weisen einen Einzug in Richtung der Wälzkörper 30c, also in axiale Richtung auf. An dem eingezogenen Ende der Dichtlippen 20c befindet sich jeweils eine Dichtfläche 22c. Diese Dichtfläche 22c steht in Berührung mit einer Stirnfläche 28c des Hauptelementes 18c.

Mit anderen Worten sind die beiden Dichtlippen 20c in Fig. 9 fest mit den Lagerringen 12c und 14c, jedoch gleitend mit dem Hauptelement 18c verbunden. Bei Betrieb des Wälzlagers 10c kann also eine Dichtlippe 20c mit dem rotierenden Lagerring 12c oder 14c mitgeführt werden, wobei das Hauptelement 18c mit dem Lagerkäfig 32c mitgeführt werden kann, an dem es mittels des Befestigungsmittels 34c befestigt ist. Anders ausgedrückt umfasst die Dichtungseinheit 16c in dem in Fig. 9 gezeigten Ausführungsbeispiel zwei Dichtlippen 20c und ein Hauptelement 18c, die bei Betrieb des Wälzlagers jeweils unterschiedliche Rotationsgeschwindigkeiten voneinander aufweisen können. Ausführungsbeispiele, bei denen die Gegenlaufflächen der Dichtlippen 20c nicht durch spezielle Flächen auf dem Innenring 14c oder Außenring 12c des Lagers 10c gebildet werden, sondern durch Stirnflächen 28c des Hauptelementes 18c, könnten z. B. bei großen Wälzlagern genutzt werden. Ein Verschleiß der Stirnfläche 28c könnte leicht behoben werden, dadurch, dass ein einfacher Austausch des Hauptelements 18c und ggf. der Dichtlippen 20c zur Instandsetzung ausreichen könnte. Da auch hier das Hauptelement 18c an dem Lagerkäfig 32c befestigt ist, könnten durch geringeren Verschleiß und geringere auftretende Reibung auch höhere Drehzahlen des Lagers ermöglicht werden.

Die Dichtlippen 20c können in einigen Ausführungsbeispielen z. B. aus einem elastischen Material gefertigt sein. In diesem Falle kann die eingezogene Dichtfläche 22c der am oberen Lagerring 12c befestigten Dichtlippe 20c so viel Spielraum ermöglichen, dass eine begrenzte Verkippung des inneren Lagerrings 14c gegenüber dem äußeren Lagerring 12c möglich ist. Die dichtende Funktion der Dichtlippe 20c könnte also auch im Falle einer Verkippung des Lagers 10c erhalten bleiben. Bei einer Verkippung des inneren Lagerrings 14c könnten in Fig. 9 die an den Lagerring 14c befindliche Dichtlippe 20c, die Wälzkörper 30c, der Lagerkäfig 32c sowie das Hauptelement 18c mit dem inneren Lagerring 14c mitgeführt werden.

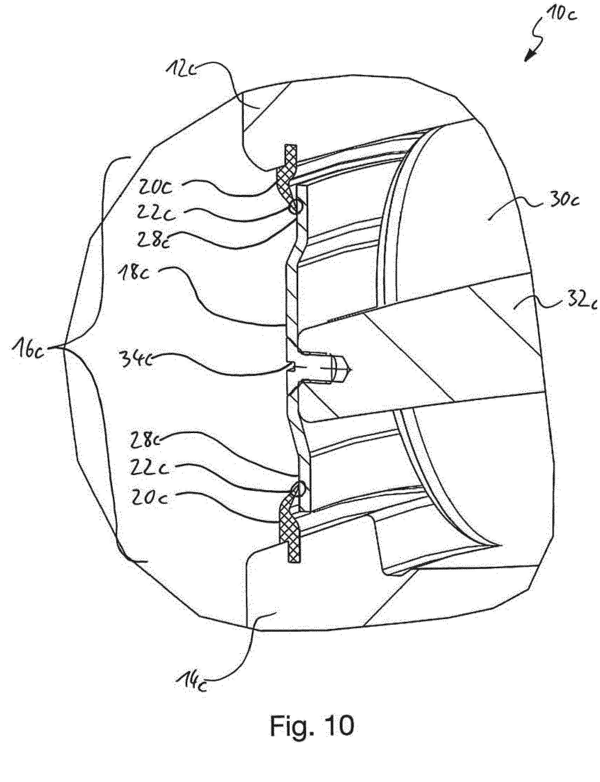

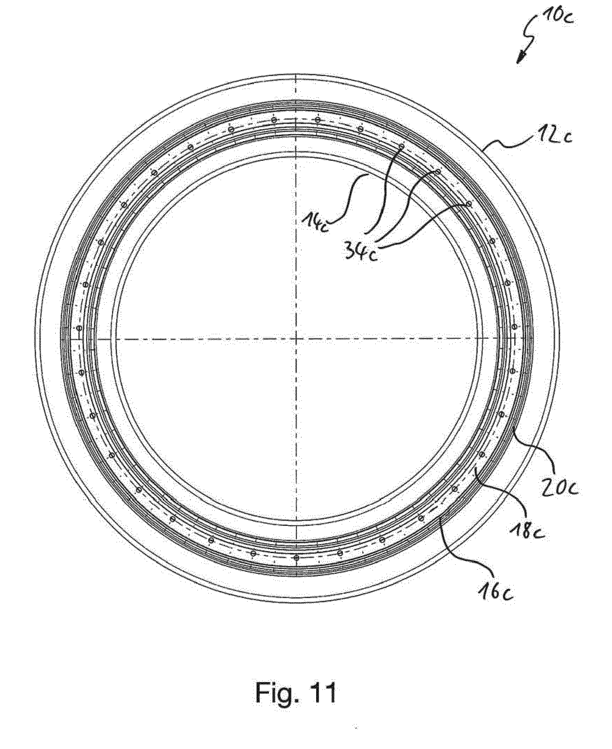

Fig. 10 zeigt denselben Ausschnitt des Wälzlagers 10c nochmals in einer perspektivischen Querschnittsansicht. Weiterhin zeigt Fig. 11 das gesamte Wälzlager 10c und die gesamte Dichtungseinheit 16c in Aufsicht. Hierbei wird nochmals deutlich, dass die Dichtungseinheit 16c ringförmig ausgeführt ist. Wie bereits gesagt, könnte die Ausführung der Dichtungseinheit 16c (oder des Hauptelementes 18c oder der Dichtlippe 20c) auch teilringförmig sein.

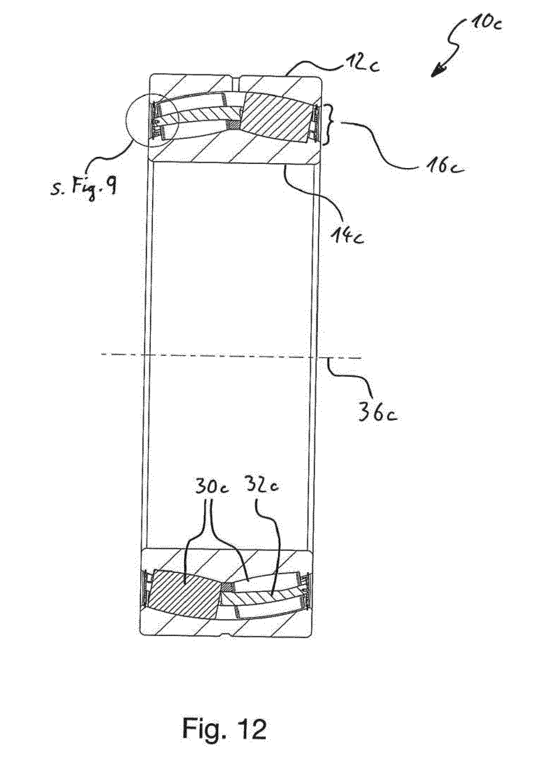

Fig. 12 zeigt einen Querschnitt durch das Wälzlager 10c mit der Dichtungseinheit 16c in Seitenansicht. Die Mittelachse 36c ist wiederum als gestrichelte Linie eingezeichnet. Ferner befinden sich zu beiden Seiten des Lagers 10c jeweils eine Dichtungseinheit 16c. Ein mit einem Kreis markierter Bereich zeigt den Ausschnitt, der in Fig. 9 im Detail dargestellt ist.

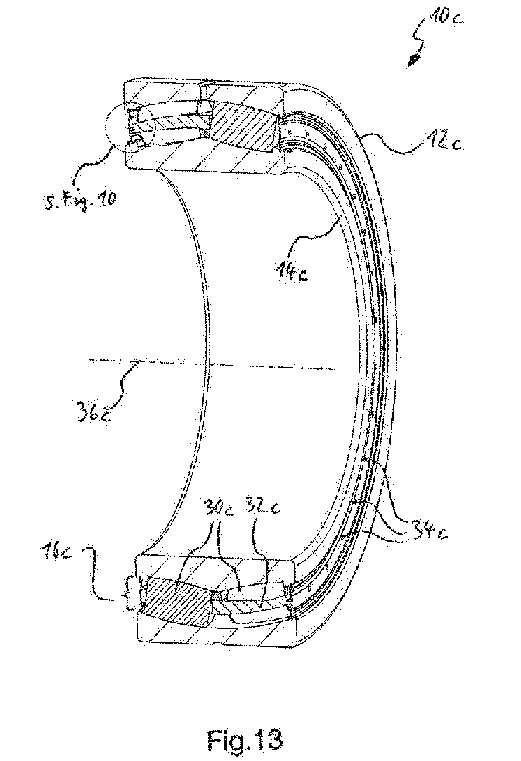

Fig. 13 zeigt nochmals einen Querschnitt durch das Wälzlager 10c mit Dichtungseinheit 16c in perspektivischer Ansicht. Ein Kreis markiert den Ausschnitt, der in Fig. 10 im Detail dargestellt ist.

In sämtlichen Ausführungsbeispielen könnte die konstante Position des Hauptelements 18a; 18b; 18c in Bezug auf die Wälzkörper 30a; 30b; 30c dafür sorgen, dass das Hauptelement 18a; 18b; 18c einer Kippbewegung (Verschwenkung, Pendeln) des Lagers 10a; 10b; 10c folgt und damit ein Kontakt zwischen Wälzkörpern 30a; 30b; 30c und Hauptelement 18a; 18b; 18c vermieden wird. Die Dichtungseinheit 16a; 16b; 16c könnte aufgrund der austauschbaren Verbindung leicht montiert oder demontiert werden, auch wenn das Lager 10a; 10b; 10c bereits eingebaut ist. Dies könnte Montage und Wartungsarbeiten erheblich erleichtern. Beispielsweise könnte bei Anwendungen im Bereich der Windkraft eine Dichtungseinheit 16a; 16b; 16c ausgewechselt werden und ein gleichzeitiger Ausbau des kompletten Lagers 10a; 10b; 10c vermieden werden. Dies könnte auch die durch Verschleiß und einen damit verbundenen Austausch entstehenden Kosten reduzieren. Eine teilringförmige Ausführung des Hauptelements 18a; 18b; 18c (oder der Dichtungseinheit 16a; 16b; 16c) könnte Montage- und Demontageprozesse weiterhin vereinfachen, da hierzu eine Entfernung weiterer Bauteile nicht erforderlich wäre. Durch den leichten Ein- und Ausbau der Dichtungseinheit 16a; 16b; 16c könnte zudem eine nachträgliche Zuführung bzw. Erneuerung von Schmiermittel ermöglicht werden.

Auch Begutachtungsmaßnahmen oder Inspektionen, beispielsweise an Wälzkörpern, Lagerringen etc., könnten durch eine kurzzeitige Entfernung, beispielsweise der Dichtlippen 20a; 20b; 20c deutlich erleichtert werden. Im Vergleich zu konventionellen Lösungen könnten die genannten Ausführungsbeispiele eine höhere Winkel- oder Axialbeweglichkeit des Lagers 10a; 10b; 10c (Pendelrollenlager) ermöglichen.

In einigen Ausführungsbeispielen kann die Dichtlippe 20a; 20b; 20c beispielsweise aus Elastomer oder Kunststoff gefertigt sein. Dadurch könnte ein Austausch der Dichtlippe 20a; 20b; 20c auf einfache Weise ermöglicht werden. Dadurch könnte die Dichtungseinheit 16a; 16b; 16c in Anwendungen zum Einsatz kommen, bei denen hohe Lebensdauer notwendig sind, beispielsweise in Windenergieanlagen.

Durch die austauschbare Verbindung des Hauptelements 18a; 18b; 18c könnte eine einfache Demontage und beispielsweise eine Tastprüfung der Laufbahnen, Wälzkörper 30a; 30b; 30c des Lagerkäfigs 32a; 32b; 32c etc. erfolgen. Ebenso könnten gezielte Fettproben zur Schmierstoffanalyse entnommen werden, da nun alle Bereiche des Wälzlagers 10a; 10b; 10c offen und damit frei zugänglich gemacht werden könnten.

Im Vergleich zu konventionellen Lösungen könnte durch Ausführungsbeispiele der von Schmierstoff auszufüllende Raum innerhalb des Wälzlagers 10a; 10b; 10c erheblich reduziert werden, wodurch weniger Bedarf an Schmierstoff auftreten könnte. Die Dichtungseinheit 16a; 16b; 16c könnte zudem in Ausführungsbeispielen aus leichtem Material ausgeführt sein, was zu einer Materialkostenreduktion, einer Gewichtsreduzierung und damit zu einer erleichterten zeiteffizienten Montage führen könnte. Eine werkseitige Vorbefettung könnte eine Verunreinigung während der Montage des sonst ungedichteten offenen Lagers 10a; 10b; 10c verhindern.

Durch den einfachen Aufbau im Vergleich zur konventionellen Lösung könnten für Prototypen und kleinere Stückzahlen wirtschaftlichere Investitionen erforderlich sein. Für eine angestrebte Serienfertigung könnten die bekannten Fertigungsverfahren, wie Spritzgießen, Vulkanisieren o.ä. angewendet werden.

### Bezugszeichenliste

- 10a; 10b; 10c: Wälzlager
- 12a; 12b; 12c: Erster Lagerring
- 14a; 14b; 14c: Zweiter Lagerring
- 16a; 16b; 16c: Dichtungseinheit
- 18a; 18b; 18c: Hauptelement
- 20a; 20b; 20c: Dichtlippe
- 22a; 22b; 22c: Dichtfläche der Dichtlippe
- 24a: Nut
- 26b: Stirnfläche
- 28c: Stirnfläche
- 30a; 30b; 30c: Wälzkörper
- 32a; 32b; 32c: Lagerkäfig
- 34b; 34c: Befestigungsmittel
- 36a; 36b; 36c: Mittelachse
- 112: Großlager
- 114: Labyrinthring
- 116: V-Ring
- 120: Lagerring
- 130: Wälzkörper
- 140: Labyrinth

## Patentansprüche

1. Wälzlager (10a; 10b; 10c) mit einem ersten Lagerring (12a; 12b; 12c), einem zweiten Lagerring (14a; 14b; 14c) und einer mehr stückig ausgebildeten Dichtungseinheit (16a; 16b; 16c), wobei die Dichtungseinheit (16a; 16b; 16c) ein gegenüber dem ersten Lagerring (12a; 12b; 12c) und dem zweiten Lagerring (14a; 14b; 14c) frei verdrehbares, zumindest teilringförmiges Hauptelement (18a; 18b; 18c) und mindestens eine Dichtlippe (20a; 20b; 20c) umfasst, wobei das Hauptelement (18a; 18b; 18c) und die Dichtlippe (20a; 20b; 20c) untereinander austauschbar verbindbar sind.

2. Wälzlager (10a; 10b; 10c) gemäß Anspruch 1, wobei die Dichtlippe (20a; 20b; 20c) zu dem Hauptelement (18a; 18b; 18c), dem ersten Lagerring (12a; 12b; 12c) oder dem zweiten Lagerring (14a; 14b; 14c) verdrehbar ist.

3. Wälzlager (10a; 10b; 10c) gemäß einem der vorangegangenen Ansprüche, wobei eine Dichtfläche (22a; 22b; 22c) der Dichtlippe (20a; 20b; 20c) eine sich radial erstreckende Stirnfläche (28c) des Hauptelements (18a; 18b; 18c), eine sich radial erstreckende Stirnfläche (26b) des ersten Lagerrings (12a; 12b; 12c) oder des zweiten Lagerrings (14a; 14b; 14c), oder eine Nut (24a) des ersten Lagerrings (12a; 12b; 12c) oder des zweiten Lagerrings (14a; 14b; 14c) berührt.

4. Wälzlager (10c) gemäß einem der vorangegangenen Ansprüche, wobei die Dichtlippe (20c) eine Dichtfläche (22c) zum Abdichten an dem Hauptelement (18c) aufweist, und an dem ersten Lagerring (12c) oder dem zweiten Lagerring (14c) befestigt ist.

5. Wälzlager (10a; 10b) gemäß einem der Ansprüche 1 bis 4, wobei die Dichtlippe (20a; 20b) eine Dichtfläche (22a; 22b) zum Abdichten an dem ersten Lagerring (12a; 12b) oder dem zweiten Lagerring (14a; 14b) aufweist, und an dem Hauptelement (18a; 18b) befestigt ist.

6. Wälzlager (10a; 10b) gemäß Anspruch 6, wobei das Hauptelement (18a; 18b) oder die mindestens eine Dichtlippe (20a; 20b) nach Montage in dem Wälzlager (10a; 10b) symmetrisch zu einer senkrecht zu einer Rotationsachse (36a; 36b) des Wälzlagers (10a; 10b) stehenden Ebene ausgeführt sind.

7. Wälzlager (10a; 10b; 10c) gemäß einem der vorangegangenen Ansprüche, wobei das Hauptelement (18a; 18b; 18c) oder die Dichtlippe (20a; 20b; 20c) mit dem ersten Lagerring (12a; 12b; 12c), dem zweiten Lagerring (14a; 14b; 14c) oder dem Lagerkäfig (32a; 32b; 32c) austauschbar verbindbar sind.

8. Wälzlager (10a; 10b; 10c) gemäß einem der vorangegangenen Ansprüche wobei das Wälzlager (10a; 10b; 10c) einen Außendurchmesser von mindestens 400 Millimetern aufweist.

9. Wälzlager (10a; 10b; 10c) gemäß einem der vorangegangenen Ansprüche, wobei der erste Lagerring (12a; 12b; 12c) und der zweite Lagerring (14a; 14b; 14c) in einem begrenzten Winkel gegeneinander verkippbar sind.
